Europäisches Patentamt

European Patent Office

Office européen des brevets

(19)

(11) **EP 1 710 748 A2**

(12) **EUROPEAN PATENT APPLICATION**

(43) Date of publication:
**11.10.2006 Bulletin 2006/41**

(51) Int Cl.:
***G06T 3/40*** *(2006.01)*

(21) Application number: **06250533.4**

(22) Date of filing: **01.02.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.04.2005 US 102042**

(71) Applicant: **Picsel (Research) Ltd.**
**Glasgow G51 4BP (GB)**

(72) Inventors:
• **Anwar, Majid**
**Glasgow G46 6SF (GB)**

• **Jenson, Scott A.**
**Edina MN 55424 (US)**
• **Heenan, Joseph**
**Glasgow G13 1BL (GB)**
• **McLaughlin, Peter**
**Adambrae, Livingston EH54 9JT (GB)**

(74) Representative: **Cooper, John**
**Murgitroyd & Company,**
**Scotland House,**
**165-169 Scotland Street**
**Glasgow G5 8PL (GB)**

(54) **System and method for dynamically zooming and rearranging display items**

(57)    The invention relates to a system and method for dynamically zooming and rearranging display items through a series of output displays. In each subsequent output display, visual components making up the display are rearranged and scaled. The visual components in a first layout are displayed at a first rendered size. In response to a zoom input to change the first rendered size of the plurality of visual components to a second rendered size, an intermediate visual display of the plurality of vis-
ual components is generated by calculating an intermediate zoom factor intermediate between unity and the ratio of second to first rendered sizes, calculating a second layout of the plurality of visual components dependent on the intermediate zoom factor, and scaling the plurality of visual components by a magnification level. The generated intermediate visual display is displayed in a display area; and the visual components at the second rendered size is displayed in a third layout.

Fig. 1

**Description**

Field of the Invention

The invention relates to a system and method for dynamically zooming and rearranging display items.

Background of the Invention

Recent years have seen rapid growth in the area of mobile computing and telecommunications. Mobile devices, such as PDAs and cellular telephones, typically have comparatively small display screens. Consequently, it can be difficult for these devices to display the large amounts of textual and graphical information typically included in modem, content-rich user interfaces.

One approach to overcoming this problem is to provide a broad overview of such information (e.g. in iconic or note form) and allow the user to select items of interest that are then displayed in greater detail (e.g. in greater magnification or focus).

Conventional methods of zooming from one view of a display to another view of the same display operate on the basis of the selection of a particular zoom or size from a menu. This causes the display to change from an initial display to a new display with the selected scale. However, these methods only show the initial and final version of the new display. They also require the user to pan or reposition the information being viewed when a "zoom in" operation causes parts of a display to reside beyond the visible screen area.

Summary of the Invention

The invention in general relates to methods and systems for dynamically zooming and rearranging content in an incremental fashion. In one aspect, the invention relates to a method of displaying a plurality of visual components. The plurality of visual components can include components within one or more documents, as well as user interface components. Visual components can include text strings, images, menu items, graphic objects, and icons.

The method includes displaying visual components in a first layout at a first rendered size, and then receiving a zoom input to change the first rendered size to a second rendered size. The second rendered size can be either larger or smaller than the first rendered size. To accomplish this change, the method includes generating an intermediate display. The intermediate display is generated by calculating an intermediate zoom factor, which is between one and the ratio of the second rendered size and the first rendered size, and calculating a second layout for the plurality of visual components based at least in part on the intermediate zoom factor. The intermediate visual display generation also includes scaling the visual components by a magnification factor. The method includes displaying the intermediate visual display, followed by displaying a further visual display in which the plurality of visual components are arranged in a third layout at the second rendered size.

In one embodiment, the method includes generating a series of intermediate visual displays. In each visual display, a new layout is calculated and the plurality of visual components are displayed at a rendered size that is between the rendered size of the visual components in the previous visual display and the second rendered size. According to one feature, each new layout is generated such that the plurality of visual components conform to the width of a display area, such as a display screen or a window on a display screen. For example, generating each intermediate layout may include repositioning line breaks in strings of text, thereby breaking a line of text into multiple lines or combining multiple lines of text into fewer lines of text. In another example, the method includes rearranging visual components that were arranged vertically in relationship to each other in one layout to be arranged horizontally in relationship to each other in a later generated layout. Similarly, visual components arranged horizontally in relationship to each other in one layout may be arranged vertically in relationship to each other in a latter layout

According to an additional feature, the method can be used in relation to a menu system. The menu system can be used to access the plurality of visual components. In addition, the same set of controls a user operates to navigate the menu system can be used to provide the zoom factor. The controls can be either continuously or abruptly actuated to provide the zoom factor. The received zoom factor can also be stored as a user preference for presenting other pluralities of visual components.

In another embodiment, the method includes controlling the rendered size of one or more visual components of the plurality of visual components independently of other visual components of the plurality of visual components. For example, the method can adjust the rendered size of visual components corresponding to user interface elements available for interacting with a document, without adjusting the size of visual components corresponding to the content of the document.

In another aspect, the invention relates to a system for displaying a plurality of visual components, such as the visual components described above. The system includes an input for receiving a zoom factor, a calculation module, a layout engine, and a rendering module. The calculation module calculates a series of at least three layout sizes, including an initial layout size, an intermediate layout size, and a final layout size. In one implementation, each layout size is substantially equal to the initial layout size divided by an intermediate zoom factor. The calculation module also calculates a series of at least three magnification levels corresponding to the layout sizes in the series of layout sizes. Each magnification level in the series, in one implementation, is calculated to be substantially equal to the width of a display area divided by a corresponding layout size. The two series are used to incrementally zoom the plurality of visual components from a first rendered size to a second rendered size based on the received zoom factor.

The layout engine generates a series of layouts for the plurality of visual components corresponding to the layout sizes in the series of layout sizes. The layout engine outputs the series of layouts and the plurality of visual components to the renderer, which generates a series of output frames including the plurality of visual components. The layouts are generated, in one embodiment, such that when a corresponding magnification level is applied to the layout the visual components conform to the width of the display area in which they are displayed. In another embodiment, the layout engine includes one or more arrangement logics. For example, the layout engine may include a first arrangement logic for arranging graphical user interface components and a second arrangement for arranging document components. Each arrangement logic includes a corresponding set of rules for flowing visual components of a particular type into a display area.

The renderer generates a series of output frames based on a corresponding layout from the series of layouts and a corresponding magnification level from the series of magnification levels. The output frames are then displayed in the display area.

Description and Drawings

An embodiment of the invention will now be described by way of example only with reference to the accompanying drawings in which:

Figure 1 is a block diagram of the architecture of a system for dynamically zooming and rearranging display items, according to an illustrative embodiment of the invention;

Figure 2 is a flowchart depicting the algorithm employed by the system shown in Figure 1 for fitting a document to the width of a display screen, according to an illustrative embodiment of the invention;

Figure 3 is a flowchart of a method of dynamically zooming and reflowing performed by the system shown in Figure 1, according to an illustrative embodiment of the invention;

Figure 4 is a diagrammatic illustration of the method of dynamically zooming and rearranging visual components applied to a user interface item, according to an illustrative embodiment of the invention; and

Figure 5 is a diagrammatic illustration of the method of dynamically zooming and rearranging display items, applied to the content of a document, according to an illustrative embodiment of the invention.

Detailed Description

When an author creates a document, he/she typically designs the document to be of a particular size and positions and sizes any objects in the document (e.g. text and images) accordingly. The term authored document size ($D_{init}$) refers to the actual physical size of a document created by an author (e.g. the authored document size of a document authored to fit an A4 page is 210 x 297 millimetres). Similarly, the term authored component size refers to the author-specified size of each object within a document (e.g. text objects may be specified to have a 12 point size).

When a document is processed by a system designed according to an embodiment of the invention the document may be laid out (i.e. objects positioned on the page) to fit a size other than the size $D_{init}$ intended by the author. The term document layout size ($D_{layout}$) refers to the physical size of a processed document, such that printing, or rendering the processed document at unity scale, would produce a document whose actual physical size is equal to the document layout size. As an example, a document with an authored document size of A4 dimensions may be processed to fit actual page width and height dimensions different from A4 by setting a document layout size different from 210 x 297 mm.

The rendered size of a document refers to the size of the document after rendering on a display screen device. Similarly, the rendered size of a visual component contained within a document refers to the size of the visual component after rendering on the display screen.

The rendered size may be affected by a number of parameters including the document layout size ($D_{layout}$) and a magnification factor (M).

The magnification factor (M) is a scaling factor that allows the rendered size of a document to differ from the document layout size ($D_{layout}$). For example, a magnification factor of 2 (or 200%) would cause an A4 document (with document layout size 210x297mm) to be rendered with a rendered size of 420x594mm. From this example it will be noted that whilst the rendered size of the document has changed (because the document and its objects appear twice as large on a screen), neither the document layout size nor the authored component size of any object therein has been changed.

The term 'zoom' will be used henceforth to mean an operation in which the value of a magnification factor is changed. As discussed, when a document is zoomed, its rendered size changes but its document layout size and authored component size parameters do not change.

Similarly, the term 'component resize' will be used henceforth to mean an operation in which one or more authored component sizes are changed. The most common example of this is to change the point size of text. During a component resize operation, the values of the authored document size, the document layout size, and the magnification parameter remain unchanged. Instead, a 'component resize' operation causes selected visual components in a document to adopt a different rendered size in the eventually rendered document. However, the rendered size of other components within the document remains unchanged.

The term 'reflow' will be used henceforth to mean an operation resulting from a change in the document layout size parameter. In this operation, visual components are laid out in an arrangement to fit the modified document layout size, causing them to occupy different page positions but otherwise having the same rendered size.

The system for dynamically zooming and rearranging visual components will be referred to henceforth as the zoom/reflow system. Similarly, the method for dynamically zooming and rearranging display items will be referred to henceforth as the method for zooming and reflow.

The invention provides for a system and method of dynamically scaling and reformatting a display to increase or decrease the size of visual components within the display, whilst at the same time performing dynamic rearrangement of the display items to optimise use of the available screen area.

Alternatively, using the terminology provided above, the zoom/reflow system and method combines the 'zoom' and 'reflow' actions into a single operation, wherein the rendered size of visual component is changed at the same time as the object is rearranged in a document, in response to a change in document layout size.

It will be appreciated that whilst the zoom/reflow system and method is primarily described in terms of a mobile telephone application, this is purely for the purposes of example. In particular, the zoom/reflow system and method is not limited to use on a mobile telephone, but may instead be used on any display device.

System Architecture

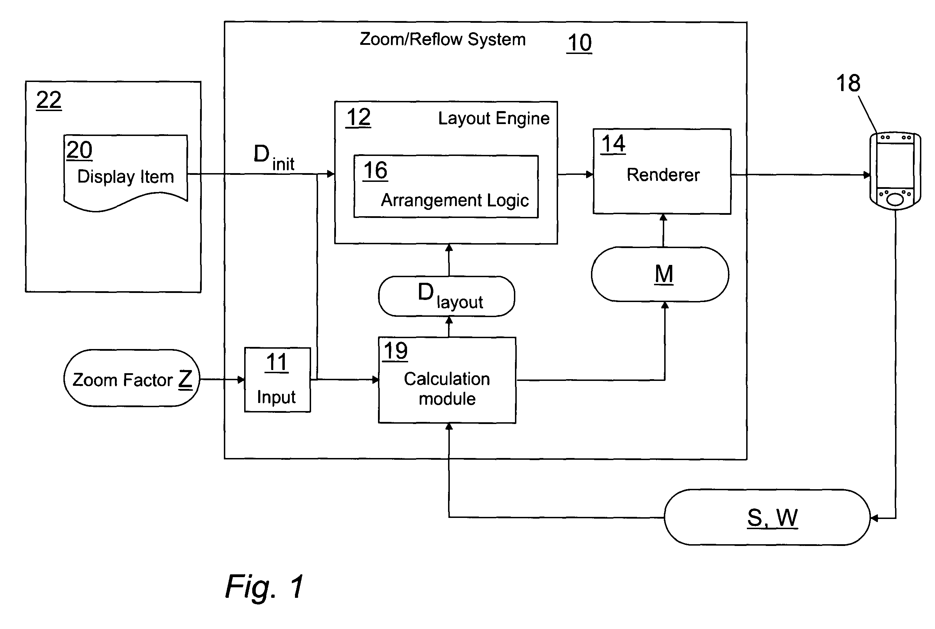

Figure 1 is a block diagram of a zoom/reflow system 10. The zoom/reflow system 10 intervenes between a document display software package 22 and a screen 18 of a host device. The zoom/reflow system 10 comprises an input 11, a layout engine 12, a renderer 14, an arrangement logic module 16 and a calculation module 19.

In use, the zoom/reflow system 10 receives a desired display item 20 of authored document size ($D_{init}$). The display item includes a plurality of visual components, such as text strings, graphic objects, images, and/or icons. The zoom/reflow system 10 also utilizes a number of other parameters, some of which are input to the zoom/reflow system 10 by a user or the document display software package 22 (henceforth to be known as input parameters) and some of which are calculated by the calculation module 19 within the zoom/reflow system 10 (henceforth to be known as calculated parameters).

The input parameters to the zoom/reflow system 10 include:

(a) the authored document size ($D_{init}$) which is normally established by the document display software package 22, and when received by the zoom/reflow system 10 is applied to the layout engine 12 and the calculation module 19;

(b) the zoom factor (Z), which is input by the user using the input 11 and applied to the calculation module 19; and

(c) screen parameters and window parameters.

The screen and window parameters include the screen size parameter (S) which represents the physical width and height of the screen 18 and the window size parameter (W) which represents the physical width of a display window (or display workspace) that is available for the presentation of the desired display items. S and W both are received from the host device and input to the calculation module 19. However, the window size parameter (W) does not assume the presence of a windowing system on the host device.

The calculated parameters in the zoom/reflow system 10 include:

(a) the document layout size ($D_{layout}$); and

(b) the magnification factor (M).

More particularly, on receipt of a desired zoom factor (Z) from the user and the authored document size ($D_{init}$) of the desired display item from the document display software package 22, the calculation module 19 may calculate the document layout size ($D_{layout}$). The document layout size ($D_{layout}$) is then output to the layout engine 12.

The layout engine 12 passes the authored component sizes of visual components contained within the desired display item 20 and the document layout size ($D_{layout}$) parameter to the arrangement logic module 16. The arrangement logic module 16 includes a set of arrangement logics. Each arrangement logic includes instructions and algorithms for the positioning of visual components on a virtual page of size document layout size ($D_{layout}$). The arrangement logic module 16 is activated when the document layout size ($D_{layout}$) differs from the authored document size ($D_{init}$) of the desired display item 20.

The arrangement logic module 16 provides a mechanism for changing the spatial relationship and positioning of objects in a document if the size of the document changes from that anticipated by the author. For example, text fitted on a single line by the author may be wrapped across lines if the document layout width is reduced. Similarly, the relative positioning of images may be altered with changes in document size. Any number of algorithms known in the art can be used to rearrange visual components in a document when the document layout size of the document is different from the authored document size of the document. Similarly, arrangement logic may be applied to columnar or tabulated documents, to rearrange the columns or tables when the dimensions of the document depart from those assumed when creating the tables or columns.

The layout engine 12 then arranges the visual components of the desired display item 20 in accordance with the instructions from the arrangement logic unit and transmits the resulting virtual page to the renderer 14.

In addition to calculating the document layout size ($D_{layout}$), the calculation module 19 calculates the magnification scale factor M from the screen size parameter (S) (and optionally the window size parameter (W)). The magnification scale factor M is used by the renderer 14 to scale the desired display item 20 to a desired output size.

For example, let a desired display item 20 be a document 20 with an authored document size ($D_{init}$) width of 8 inches which has been laid out on a virtual page having document layout size ($D_{layout}$) width also of 8 inches. In the case of a handheld or mobile device, the screen width could be 4 inches (i.e. screen size parameter S=4 inches). For simplicity, we assume in this example that the window available for rendering comprises the entire screen.

Altering the magnification scale factor (M) varies the proportion of a document viewable on the screen 18. For instance, a magnification scale factor (M) equal to 1 produces a display document equal in size to the document layout size. Consequently, using the present example, if the magnification scale factor (M) equalled one, only half of the desired display item 20 would be visible on the 4-inch screen.

However, by applying a magnification scale factor (M) of 0.5, the renderer 14 scales the 8-inch width desired display item 20 to an output width of 4 inches (i.e. 4'= 0.5 x 8'). Consequently, a 0.5 magnification scale factor (M) allows the full width of the desired display item 20 to be viewed on the 4-inch screen. Other magnification scale factors (M) are possible, including those less than 0.5 or greater than 1.0. Using the present example, a magnification scale factor (M) of less than 0.5 will cause the output document to appear narrower than the screen width.

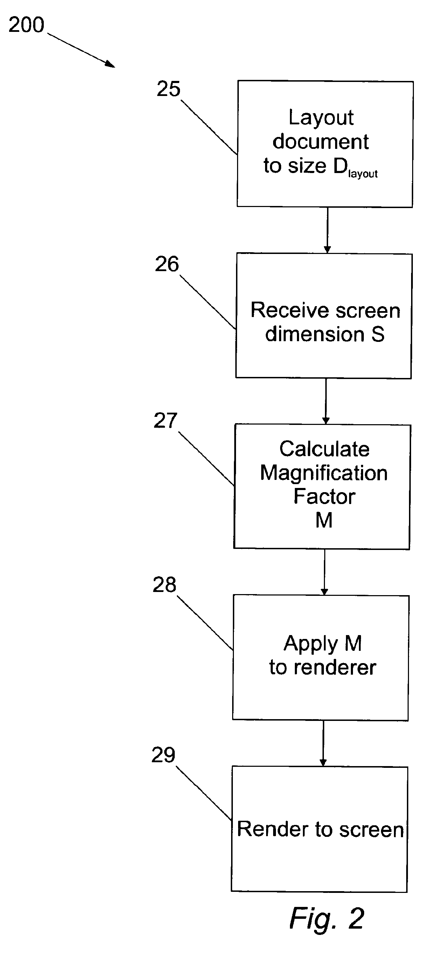

Figure 2 is a flow chart of a method 200 used by the calculation module 19 to fit a document to the width of a screen. The method includes laying out a plurality of visual components that make up a given document into a virtual page of document layout size ($D_{layout}$) in step 25. The visual components can represent document content as well as user interface elements. The calculation module 19 receives the screen parameter S at step 26. The calculation module 19 calculates a magnification scale factor (M) equal to S/$D_{layout}$ at step 27, where S is the screen size. The calculation module passes the magnification scale factor (M) to the renderer at step 28, which renders the document at step 29. In the case where the available window size (W) differs from the screen size (S), the document may be fitted to the window by replacing the screen size parameter (S) with the window size parameter (W) in step 27.

Using the above-described methodology, the zoom/reflow system 10 provides a convenient mechanism for fitting the full width of a document to the width of a screen 18. This enables a user to avoid the necessity of panning from side to side in order to see the contents of the document. Furthermore, if the document extends beyond the length of the screen, the document may be conveniently scrolled in a vertical direction only. This arrangement is particularly advantageous on mobile devices intended for one-handed operation, such as mobile phones.

Dynamic Zoom and Reflow Operation

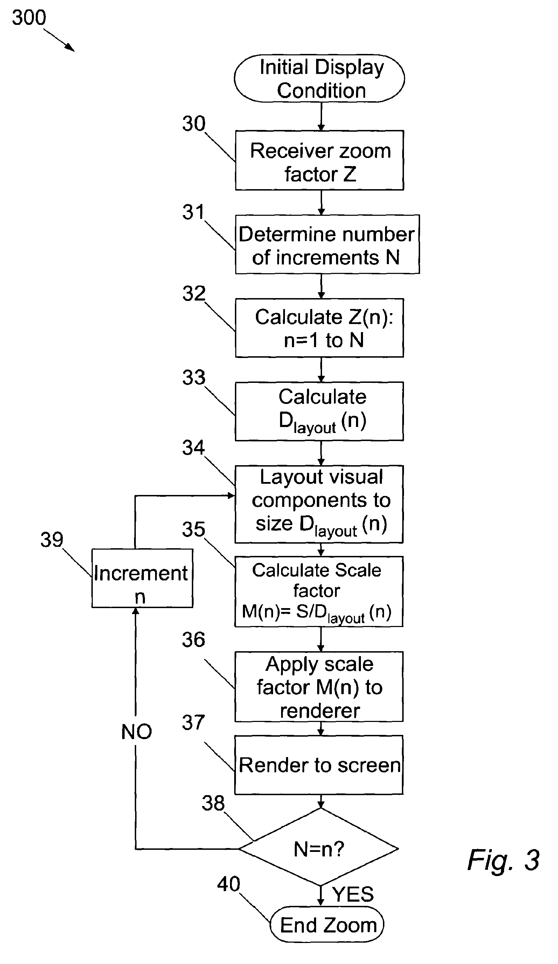

Figure 3 is a flowchart of a zoom/reflow method 300 carried out by the zoom/reflow system 10 depicted in Figure 1. From an initial display condition, the zoom/reflow method 300 begins with the zoom/reflow system 10 receiving a user-instruction at step 30 to zoom and reflow a display item 20 by a zoom factor Z relative to the current size of the display item 20. When Z is greater than 1, the display appears to zoom in (i.e. components in the display item are increased to a rendered size Z times larger than their initial condition) and when Z is less than 1 the display zooms out. For example, with a factor Z equal to 2, the display is "zoomed in" by a factor of 2, to present visual components in the display item 20 at a rendered size twice as large as their rendered size prior to zooming.

The zoom/reflow system, at step 31, calculates a number of intermediate displays to be presented between the initial presentation of the display item 20 and final presentation of the display item 20 at the final rendered size. In one implementation, the number of increments varies in relation to the zoom factor Z. In an alternative implementation, the number of increments N is fixed independent of the zoom factor Z. The process of providing incremental intermediate zoom states in the zoom/reflow method 300 augments the visual impression of zooming, as the user sees the display change dynamically in a similar fashion to a manually controlled optical zoom. Based on the number of intermediate displays, the method includes calculating the intermediate zoom factor ($Z(n)$) for a particular intermediate display at step 32. The intermediate zoom factor may be calculated from the following expression:

$$Z(n) = 1 + n * \left( \frac{Z-1}{N} \right) \qquad \text{n = 1 to N}$$

Other expressions for calculating incremental zoom factors may also be used without departing from the scope of the invention.

Having calculated the intermediate zoom factor $Z(n)$ for the intermediate display at step 32, the intermediate document layout size parameter ($D_{layout}(n)$) for each intermediate display is calculated at step 33 in accordance with the following expression:

$$D_{layout}(n) = \frac{D_{start}}{Z(n)}.$$

In the expression, $D_{start}$ in the numerator is the initial document layout size prior to the zoom instruction. The layout engine is invoked at step 34 to re-layout the visual components of the desired display item 20 in accordance with the intermediate document layout size parameter $D_{layout}(n)$ to form a virtual page.

Preferably, the dynamic zoom operation is conducted so that at every intermediate display the virtual page is scaled to fit to the width of the screen of the host device, as described above. This prevents user-disorientation and creates the impression that the zooming operation is bounded entirely within the confines of the visible screen width. Accordingly, an intermediate magnification scale factor ($M(n)$) is calculated at step 35, using a reciprocal measure

$$\left( M(n) = \frac{S}{D_{layout}(n)} \right)$$ to scale down the rendering process when the document layout size is increased or to scale up the rendering process when the document layout size is decreased, to ensure that each virtual page is scaled to fit to the width of the screen (S).

The intermediate magnification scale factor ($M(n)$) is passed to the renderer at step 36, and the diplay item 22 is rendered to the screen at step 37 in accordance therewith. Another loop of the incremental operations (steps 33-37) is repeated at step 38, so that n is incremented by one (step 39) and the next intermediate document layout size parameter $D_{layout}(n)$ and intermediate magnification scale factor $M(n)$ are re-calculated until all N intermediate displays have been rendered to achieve the final display state (step 40).

As explained above, the same method 300 may also be used with a windowing system, so that a desired display item is dynamically fit to a window that is narrower than the screen width. This is achieved simply by substituting the window size parameter (W) in place of the screen size parameter (S) in the above expressions.

Various means of actuating the dynamic zoom/reflow method 300 may be implemented. These include controls such as menu commands or hardware buttons to dynamically reflow and zoom by a defined amount on each actuation. The method may also be applied under continuous actuation conditions (e.g. when the control is continually held down as opposed to actuated by single short depressions) to continuously zoom the display in smooth incremental steps and simultaneously reflow the document at each step until the control is released. Suitable actuators for such behaviour include press and hold buttons, wheels, dials, software sliders and scroll bars.

The method of zooming and reflow 300 is applicable to both user interface items (e.g. menus) and documents. Accordingly, the following discussion will first describe the method of zooming and reflow, as applied to user interface items, and will then describe the method as applied to documents.

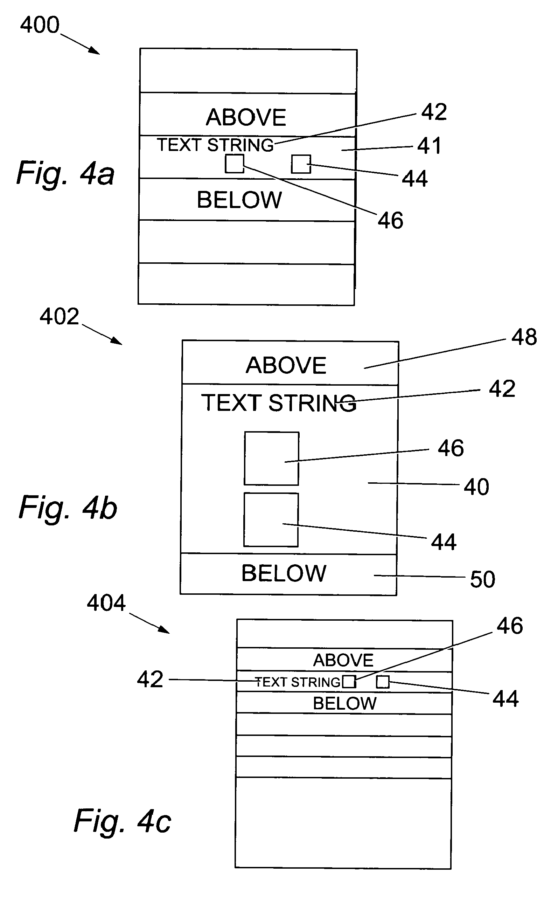

Figures 4A-4C are diagrammatic illustrations of user interface display areas affected by the zoom reflow method 300. Figure 4A includes a user interface display area 400 presenting user interface visual components corresponding to a menu at an initial document layout size ($D_{start}$). The user interface visual components include a menu field 41 containing a text string 42 and two graphic icons 44 and 46. The user interface display area 410 of Figure 4A will be referred to henceforth as the initial menu display 400. More particularly, in the initial menu display 400, the graphic icons 44, 46 are adjacently disposed below the text string 42.

Figure 4B includes a zoomed-in display of the initial menu display 400.The zoomed-in display may be, for example, an intermediate display or the final display created while zooming in on the initial menu display 400.. The zoom/ reflow system 10 generates the zoomed-in display in two steps. First, the layout engine 12 lays out the visual components of the menu into a virtual page which has a layout size that is smaller than the layout size of a prior display of the menu. To accommodate the smaller layout size, the graphic icons 44 and 46 are dynamically rearranged from a horizontal orientation to a vertical orientation. Then, the renderer 14 scales up the virtual page to fit the user interface display area 402. In the resulting user interface display, the visual components included in the initial menu display, including menu fields 41, 48 and 50, text string 42, and graphic icons 44 and 46 are rendered at a larger rendered size.

Figure 4C, in contrast, includes a zoomed-out display of the initial menu display 400. The zoomed out display is generated in a related fashion. First, the layout engine 12 lays out the visual components into a virtual page having a layout size which is larger than the layout size of a prior display of the menu. To take advantage of the additional space available in the virtual page, the layout engine 12 places the text string 42 and the two graphic objects 44 and 46 all in the same horizontal line. Next, the renderer 14 scales down the virtual page to fit the user interface display area 404.

The algorithms used to rearrange the display areas in Figures 4B and 4C are provided in the arrangement logic module 16. By varying the logic and algorithms in module 16, other display effects may be achieved.

Both the zoomed in and the zoomed out versions of the user interface display area can be stored as a user-preference setting, allowing the user to choose a display format with icons and text of a selected size. The user preference may be applied throughout the menu system or to selected parts of the menu system for future user interface display.

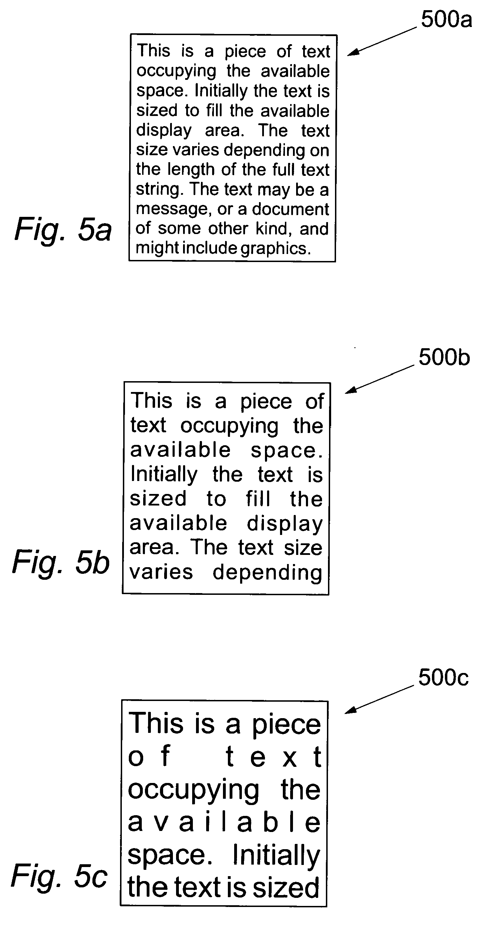

Figures 5A-5C show an example of scaling a non-user interface display item (e.g. a text document accessed via a menu system). In Figure 5A, the content (i.e., the visual components of the document) is initially scaled to fit the available screen (or window), but may be dynamically increased or decreased, respectively, in size. For example, a user may activate a select or a back control on a keypad to zoom in and out, in a manner consistent with the use of the controls in navigating a menu system such as the navigation of the menu system described in co-pending US Application No. 11/061,185 filed on February 10, 2005, the entirety of which is hereby incorporated by reference.

At each stage in the scaling process, the layout of the text in the document is rearranged so that lines of text are wrapped within the screen (window) area. This removes the necessity of panning text, which is a problem with conventional zooming techniques where the text is not reformatted. It will be understood that at any given zoom level, scrolling can be effected using, for example, up and down pointing controls on a keypad.

The dynamic aspect of the method of zooming and reflow may be appreciated by referring to the various display stages depicted in Figure 5A — 5C, wherein Figure 5A represents an initial display 500a, Figure 5B is an intermediate display 500b and Figure 5C is the final display 500c. As previously explained, the intermediate display 500b provides the user with a visual impression of a dynamic zoom operation.

This dynamic zoom function may also be used in the depiction of menu navigation in a graphical user interface (GUI). For example, if the user navigates down through a menu system to open a document, further pressing of a select button (on a keypad) once the document is open may effect scaling and dynamic reformatting of the document content as described above. The dynamic zoom function may also be effected through a "user-preference" setting, in which a user can choose a default rendered text size that is applied when a document is opened.

A desired display item may include a combination of a document including a plurality of visual components (e.g., text, graphics, video clips etc.) and one or more user interface elements (e.g. menu fields, interactive icons, title bars) presented as user interface visual components. Conventionally, such mixed displays may contain zoom controls within the user interface elements, but these zoom controls affect only the document display of the visual component of the document, and not the visual components of the user interface itself, which remains static. Furthermore, as previously mentioned, conventional display systems do not typically perform reflow simultaneously with a zoom operation.

By processing both document and user interface visual components with the same zoom and reflow mechanism (i.e. the same layout engine 12 and renderer 14), the zoom/reflow system 10 may be used to dynamically zoom and reflow an entire mixed display (comprising document and user interface visual components). This can be implemented using separate controls for each of the user interface visual components and document elements, or by a single control to zoom and reflow the entire display in a single operation.

Different rules and arrangement logic may be used for reflowing user interface visual components as compared with document visual components. In particular, the proportion of screen area available to user interface visual components and document visual components may be dynamically adjusted. Similarly, different limits/thresholds may be set on the range of zooming factors that may be applied to user interface visual components and document visual components. So for example, user interface visual components and document visual components may initially be zoomed in by the same factor, until a particular threshold is reached, whereupon the zoom on the user interface visual components ceases but the zoom on the document visual components continues.

Furthermore, the layout size applied to a user interface visual components may differ from that of document visual components occupying the same screen, even in response to a single command to dynamically zoom and reflow the user interface and document together. Similarly, line-wrapping rules may be applied differently to user interface visual components than are applied to document visual components.

Alterations and modifications may be made to the above without departing from the scope of the invention.

**Claims**

1. A method of displaying a plurality of visual components comprising
   displaying the visual components in a first layout at a first rendered size;
   receiving a zoom input to change the first rendered size of the plurality of visual components to a second rendered size;
   generating an intermediate visual display of the plurality of visual components, by

   i) calculating an intermediate zoom factor intermediate between unity and the ratio of second to first rendered sizes,
   ii) calculating a second layout of the plurality of visual components dependent on the intermediate zoom factor, and
   iii) scaling the plurality of visual components by a magnification level;

   displaying the generated intermediate visual display in a display area; and
   displaying the visual components at the second rendered size in a third layout.

2. The method of claim 1, comprising generating a series of additional intermediate visual displays, wherein each additional intermediate visual display in the series of intermediate visual displays includes the plurality of visual components at a rendered size that is between the rendered size of the previous intermediate visual display and the second rendered size, and wherein the plurality of visual components are rearranged in each additional intermediate display into a corresponding intermediate layout.

3. The method of claim 2, wherein in each of the layouts, the plurality of visual components are arranged and scaled to conform to the width of the display area.

4. The method of any preceding claim, comprising resizing the display area.

5. The method of any preceding claim, wherein the calculating of a second layout includes arranging visual components which were arranged vertically in the first layout into a horizontal arrangement in the second layout.

6. The method of any preceding claim, wherein the calculating of a second layout includes arranging visual components which were arranged horizontally in the first layout into a vertical arrangement in the second layout.

7. The method of any preceding claim, wherein the second rendered size is greater than the first rendered size.

8. The method of any one of claims 1 to 6, wherein the second rendered size is less than the first rendered size.

9. The method of any preceding claim, wherein the visual components include a string of text, and wherein calculating a second layout of the plurality of visual components includes modifying the position of line breaks in the string of text to conform to a different layout size, and wherein the placement of line breaks in the string of text is recalculated for each intermediate visual display in series of intermediate visual displays.

10. The method of any preceding claim, wherein the visual components include a string of text, and wherein calculating a second layout of the plurality of visual components includes combining a plurality of lines of text into a single display line.

11. The method of any preceding claim, wherein the zoom input is received from the same set of controls through which a user navigates a menu system.

12. The method of any preceding claim, wherein the third layout corresponds to a user-preferred layout, the method including initially displaying subsequently processed visual components according to third layout.

13. The method of any preceding claim, wherein in the visual components constitute a document accessed through a menu system.

14. The method of any preceding claim, wherein the rendered size of each of the visual components is individually controllable.

15. The method of any preceding claim, wherein the visual components include at least one of text components, images, menu items, graphic objects, and icons.

16. The method of any preceding claim, wherein the receiving of the second rendered size includes detecting a continuous actuation of a user control.

17. The method of any preceding claim, wherein the receiving of the second rendered size includes detecting an abrupt actuation of a user control.

18. The method of any preceding claim, wherein the display area is the visible screen area.

19. The method of any preceding claim, wherein the display area is a window.

20. A system for displaying a plurality of visual components arranged initially in a starting layout comprising:

an input for receiving a first zoom factor;
a calculation module in communication with the input for calculating a series of at least two layout sizes, including at least a final layout size and an intermediate layout size between the starting and final layout sizes, and a series of at least two magnification levels corresponding to the layout sizes in the series of layout sizes, for incrementally zooming the plurality of visual components from an initial rendered size to a final rendered size based on the first zoom factor received by the input;
a layout engine, in communication with the calculation module, for

i) receiving the plurality of visual components and the series of calculated layout sizes,
ii) arranging the plurality of visual components into a series of layouts corresponding to the layout sizes in the series of layout sizes, and
iii) outputting the plurality of visual components and the series of layouts;

a rendering module, in communication with the layout engine and the calculation module, for receiving the plurality of visual components, the series of layouts, and the series of magnification levels, and for outputting a series of output frames for display on a display device, wherein each output frame in the series of output frames is generated based on a corresponding magnification level from the series of magnification levels, and a corresponding layout from the series of layouts.

21. The system of claim 20, wherein the plurality of visual components includes graphical user interface components, and wherein the layout engine includes a first arrangement logic for arranging the graphical user interface components.

22. The system of claim 20 or claim 21, wherein the plurality of visual components includes document components, and wherein the layout engine includes a second arrangement logic for arranging the document components.

23. The system of any one of claims 20 to 22, wherein the plurality of visual components includes document content components and graphical user interface components, and wherein the layout engine includes a first arrangement logic for arranging the document content components and a second arrangement logic for arranging the graphical user interface components.

24. The system of claim 21 or 23, wherein the first arrangement logic includes rules for flowing document components into a predetermined layout size.

25. The system of claim 24, wherein the document components include text strings, and wherein the first arrangement logic includes rules for breaking text strings across lines.

26. The system of claim 22 or 23, wherein the second arrangement logic includes rules for flowing graphical user interface components into a display area having a predetermined width.

27. The system of claim 23, wherein the user interface receives a second zoom factor, and wherein the calculation module calculates a first series of layout sizes and a first series magnification levels for the document content components based on the first zoom factor and a second series of layout sizes and a second series of magnification levels for the graphical user interface components based on the second zoom factor.

28. The system of claim 20, wherein the plurality of visual components constitutes a single document.

29. The system of any one of claims 20 to 28, wherein each of the series of magnification levels is calculated to be substantially equal to the width of a display area on a display device divided by a corresponding layout size in the series of layout sizes.

30. The system of any one of claims 20 to 29, wherein the calculation module calculates the series of layout sizes, $D_{layout}(n)$ according to the equation

$$D_{layout}(n) = \frac{D_{start}}{Z_n},$$

wherein $D_{start}$ corresponds to a starting layout size and wherein $Z_n$ corresponds to an intermediate zoom factor between 1 and the zoom factor Z input by the user.

31. The system of claim 30 wherein the calculation module calculates the intermediate zoom factor, Z(n) according to the equation,

$$Z(n) = 1 + n * \left( \frac{Z-1}{N} \right)$$

wherein N corresponds to the number of layout sizes in the series of layout sizes.

32. The system of any one of claims 20 to 31 wherein the series of magnification levels and the series of layouts are calculated such that the plurality of visual components conforms to the width of the display area in each of the series of output frames.

Fig. 1

200

25

Layout
document
to size $D_{layout}$

26

Receive screen
dimension S

27

Calculate
Magnification
Factor
M

28

Apply M
to renderer

29

Render to screen

*Fig. 2*

300

Initial Display
Condition

30 Receiver zoom
factor Z

31 Determine number
of increments N

32 Calculate Z(n):
n=1 to N

33 Calculate
$D_{layout}$ (n)

34 Layout visual
components to
size $D_{layout}$ (n)

39 Increment
n

35 Calculate Scale
factor
M(n)= $S/D_{layout}$ (n)

36 Apply scale
factor M(n) to
renderer

37 Render to screen

NO

38 N=n?

YES

40 End Zoom

*Fig. 3*

400

Fig. 4a

ABOVE — 42
TEXT STRING — 41
— 44
BELOW
46

402

Fig. 4b

ABOVE — 48
TEXT STRING — 42
46
40
44
BELOW — 50

404

Fig. 4c

46
ABOVE
42 — TEXT STRING — 44
BELOW

500a

*Fig. 5a*

This is a piece of text occupying the available space. Initially the text is sized to fill the available display area. The text size varies depending on the length of the full text string. The text may be a message, or a document of some other kind, and might include graphics.

500b

*Fig. 5b*

This is a piece of text occupying the available space. Initially the text is sized to fill the available display area. The text size varies depending

500c

*Fig. 5c*

This is a piece of text occupying the available space. Initially the text is sized

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11061185 B